# EUROPEAN PATENT SPECIFICATION

(11) **EP 3 660 333 B1**
(45) Date of publication and mention of the grant of the patent: **01.11.2023**
(21) Application number: 18461635.7
(22) Date of filing: 27.11.2018
(51) Int. Cl.: F15B 13/043, F16K 31/00

(54) **PIEZOELECTRIC BIMORPH SERVO VALVE**
PIEZOELEKTRISCHES BIMORPHES SERVOVENTIL
SERVOVANNE BIMORPHE PIÉZOÉLECTRIQUE

(43) Date of publication of application: 03.06.2020
(73) Proprietor: Hamilton Sundstrand Corporation, Charlotte, NC 28217 (US)
(72) Inventor: Bujewicz, Maciej, 54-436 Wroclaw (PL); Korczynski, Marcin, 54-009 Wroclaw (PL)
(74) Representative: Dehns

(56) References cited:
- FR-A1- 2 573 168
- US-A- 3 152 612
- US-A- 5 343 894

## Description

### FIELD

The examples described herein relate to the field of servovalves.

### BACKGROUND

Servovalves are somewhat complicated structures with complex and expensive parts. They also contain seals that are vulnerable to leakage. Servovalves are also difficult to assemble and calibrate. It would therefore be useful to provide a servovalve that overcomes these problems and that further allows the servovalve to be better sealed.

US 9,447,797 B1 describes a deflector jet servovalve assembly comprising a piezoelectric actuator that is joined to a flow guide and feedback gear. The piezoelectric element is fitted within a slot at one end and attached at its second end to the flow guide.

US 4,825,894 describes a piezoelectric torque motor that includes a body and a pair of opposed nozzle assemblies mounted on the body. The piezoelectric actuator is a stack of individual crystals.

US 4,535,810 describes an electrically controlled valve using a piezoelectric strip as an actuator. US 3.152,612 describes a piezoelectric crystal transducer. FR 2573168 A1 describes a two-stage electrohydraulic servovalve.

### SUMMARY

A hydraulic servo valve is described herein comprising a servovalve body with first and second nozzles and a flapper provided therein, wherein said flapper is a bimorph piezoelectric flapper and comprises: a first layer of piezoelectric material and a second layer of piezoelectric material. The servovalve further comprises means for providing a positive voltage to one of said first and second layers and a negative voltage to the other of said first and second layers, and the flapper extends longitudinally between a first end and a second end. The second end of said flapper is positioned so as to be between said first and second nozzles so that said first layer faces said first nozzle and said second layer faces said second nozzle. One of said first and second layers is configured to contract in a direction away from one of said nozzles and wherein the other of said first and second layers is configured to extend in the direction of the other of said nozzles when said voltages are applied to said flapper.

The first layer and second layer have different thicknesses to each other in a state when no voltages are applied.

The servovalve may further comprise a third layer positioned between said first and second layers.

In some examples, the flapper may extend along a longitudinal axis L from said first end to said second end, and the first layer may extend longitudinally between said first end and said second end. The second layer may extend longitudinally between said first end and said second end.

In some examples, the flapper is made from layers of more than one different type of piezoelectric material.

In some examples, the valve body may be formed from a single component.

In some examples, the flapper is attached at its first end to a bracket.

In some examples, the flapper is connected at its first end to wiring, said wiring being said means for providing said first and second voltages.

In some examples, servovalve body comprises a supply port, a control port and a return port which are in fluid communication with said nozzles.

In some examples, a cover may be provided over said flapper and over said means for providing said first and second voltages.

In any of the examples described herein, the servovalve may be sealed without the use of an O-ring.

A method of making a servovalve is also described herein comprising: providing first and second nozzles and a flapper within a servovalve body wherein said flapper is a bimorph piezoelectric flapper and comprises: a first layer of piezoelectric material and a second layer of piezoelectric material, said method further comprising: providing means for providing a positive voltage to one of said first and second layers and a negative voltage to the other of said first and second layers, and wherein said flapper extends longitudinally between a first end and a second end and the method further comprising positioning said flapper so that said second end of said flapper is between said first and second nozzles and said first layer faces said first nozzle and said second layer faces said second nozzle, and wherein said one of said first and second layers is made from a material that is configured to contract in a direction away from one of said nozzles and wherein the other of said first and second layers is made from a material that is configured to extend in the direction of the other of said nozzles (180b) when said voltages are applied to said flapper.

The layers have different thicknesses to each other in a state when no voltages are applied.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the detailed description and claims when considered in connection with the figures, wherein like numerals denote like elements.
FIG. 1a illustrates a cross-sectional view of a known servovalve
FIG: 1b illustrates a cross-sectional view of the known servovalve of figure 1a, with a cover provided thereon.
FIG. 2 illustrates a cross-sectional view of a new type of servovalve as described herein.
FIG. 3 illustrates an exploded view of the new type of servovalve of figure 2.
FIG. 4 depicts the internal and external features of the new type of servovalve 200 described herein.
FIG. 5a depicts the new type of flapper described herein when connected to the bracket.
FIG. 5b depicts the flapper reacting to an electric current being applied thereto.
FIG. 6 depicts a cross-section of the new type of servovalve showing air gaps between the end of the flapper and the nozzles.

### DETAILED DESCRIPTION

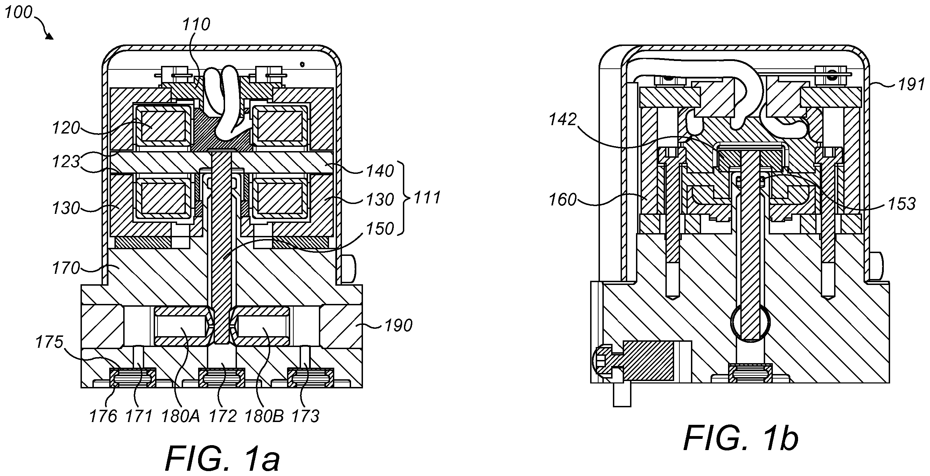

The examples described herein relate to servovalves. A known servovalve 100 is shown in figures 1a and 1b. The servovalve comprises wire routing 110, and an armature assembly 111 with a flapper 150 extending therefrom. The armature assembly 111 specifically comprises a pole piece, 130 and a plate 140 that is supported by a torsion bridge 142 as is known in the art. As can be seen in figure 1b, an O-ring 153 is provided between the flapper 150 and the section of the servovalve body through which the flapper 150 extends. Air gaps 123 are present between the pole pieces 130 and the horizontally extending plate 140. Magnetic coils 120 are also provided and wound around a permanent magnet 160. The flapper 150 extends through the body 170 of the servovalve 100 and is positioned so as to extend between two nozzles 180. Lee plugs 190 may also be provided. The body 170 of the servovalve comprises three ports: a supply port 171, a control port 172 and a return port 173. The control ports may also comprise filters 175 and/or screen rings 176.

A cover 191 may also be provided over the armature assembly as shown in figure 1b. When a current is applied to the coils 120, magnetic flux acting on the ends of the armature 150 is developed. The direction of the magnetic flux (force) depends on the sign (direction) of the current. The magnetic flux will cause the armature move either left or right, i.e. in the direction of one of the nozzles and in the direction away from the other nozzle.

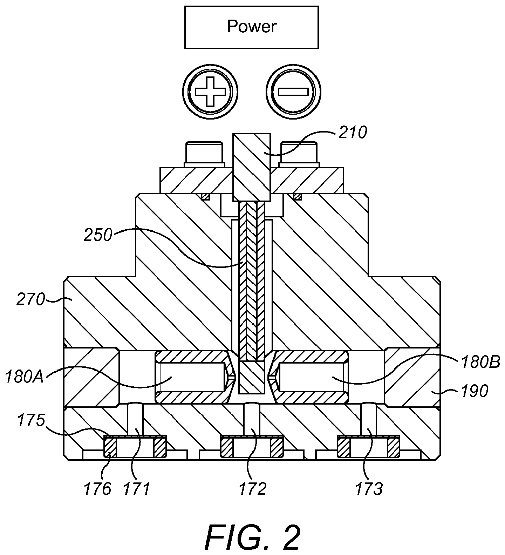

A new type of servovalve 200 is shown in figure 2. The same reference numerals have been used to represent the corresponding features as shown in figures 1a and 1b. As can be seen in figure 2, however, the whole upper part of the servovalve including the armature assembly, coils, etc. has been removed and is no longer required. Instead, this new servovalve 200 has a flapper 250 that is made from a piezoelectric material.

Specifically, in this new servovalve, the following components are no longer required or present: 1) the armature assembly which includes the assembly of the plate, torsion bridge (and the known type of flapper 150 being replaced by the new type of flapper 250) - (3 elements), 2) the coils 120 - (2 elements), 3) covers over the coils - (2 elements), wire routings - (2 elements) and 4 )torque motor fix screws - (2 elements), 5) pole piece, top and bottom (2 elements), 6) the O-ring inside the valve body (1 element), 7) the rubber gasket on top of the pole piece - (1 element).

That is, except for the flapper 150 being replaced with a new type of flapper 250 as described below, the new type of servovalve 200 described herein does not comprise any of the features in this list.

This new type of servovalve 200 is different to known servovalves because it uses a bimorph piezoelectric element/material as the flapper. This bimorph piezoelectric flapper 250 comprises two layers assembled together to form the flapper. Such bimorph materials comprise two active layers, wherein one layer contracts while the other layer expands upon the supply of voltage. In some examples, a passive layer may also be provided between the two active layers. Due to the relative contraction and expansion, the flapper 250 bends. The degree to which it bends will depend on the voltage polarization on one of the layers, either positive or negative. Electricity is provided to the flapper via wire routing 210.

Depending on the voltage that is applied to the flapper 250, the flapper 250 will bend to one side, or the other. In this way, the distance between the nozzles and the flapper 250 is changed and so also the amount of medium or fluid that is able to flow through the nozzles 180 is also changed. The flapper 250 movement is caused by a change in the size of the piezoelectric material, i.e. the relative shortening and lengthening of the two layers (that may be separated by a neutral layer). Depending on which layer receives the positive or negative voltage, the bending of the flapper towards one of the nozzles and the deflection from the other nozzle can be achieved.

According to the invention, the two layers have different thicknesses to each other in a state when no voltages are applied and this also affects the bending of the flapper 250.

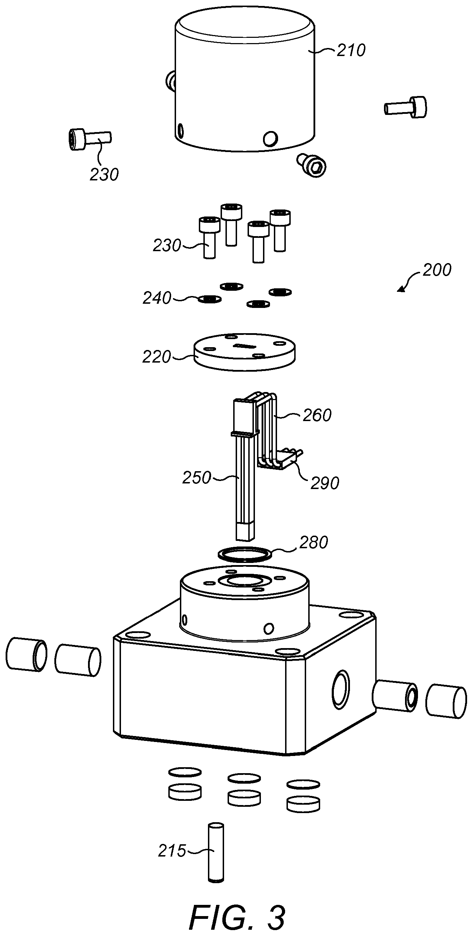

Figure 3 depicts an exploded view of the new type of servovalve 200 that is shown in figure 2. This figure shows how the servovalve 200 may be assembled. The servovalve body 270 may be formed as one single component. This differs from known servovalve bodies which may be formed of multiple components that are assembled together. The servovalve 200 may also have a cover 210 which may be connected to a piezoelectric bracket 220 via screws 230 and washers 240. The flapper 250 is electrically connected to a power/voltage source via wires 260. A rubber seal 290 and a copper seal 280 may also be used. The rubber seal 290 serves to seal the servovalve 200 so that no dirt can get inside the cover 210. The copper seal 280 serves to seal the servovalve 200 so that there is no leakage of fuel from inside to outside and to keep the servovalve 200 tightly sealed from the environment.

The nozzles 180a, 180b are again provided so as to be positioned within the servovalve body 270 so that they are either side of the flapper 250. The servovalve 200 body 270 also has three ports, i.e. a supply port 171, a control port 172 and a return port 173, as is described above with reference to figures 1a and 1b. A pin 215 may be used during assembly to accurately position the valve. The use of the pin 215 may also prevent the incorrect installation of the valve, e.g. preventing the operator from switching or misaligning the ports.

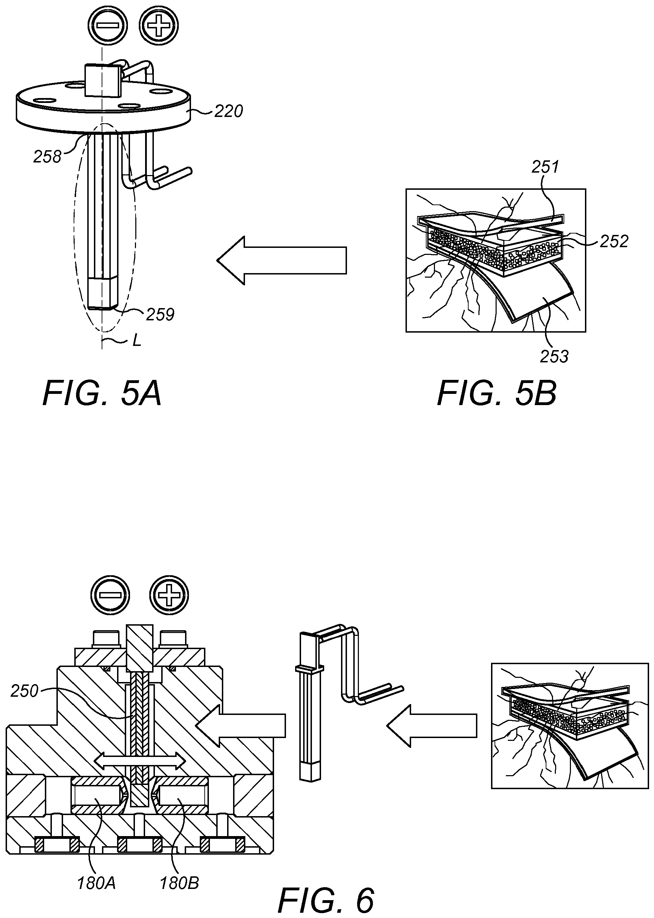

As can be seen in figure 5a, the flapper 250 comprises an elongated cylindrical component that extends along a longitudinal axis L from a first end 258 to a second end 259. The layers 251, 252 and 253 also extend longitudinally between the first end 258 and the second end 259 and are positioned on opposite longitudinal sides of the flapper 250 to each other. The flapper 250 is positioned between the nozzles 180a, 180b so that one of the layers 251 faces one nozzle 180a while the other layer 253 faces the other nozzle 180b. In the new servovalve 200 the second end 259 of the flapper is positioned between the nozzles 180a, 180b whereas the voltage is applied to the flapper 250 at its first end 258.

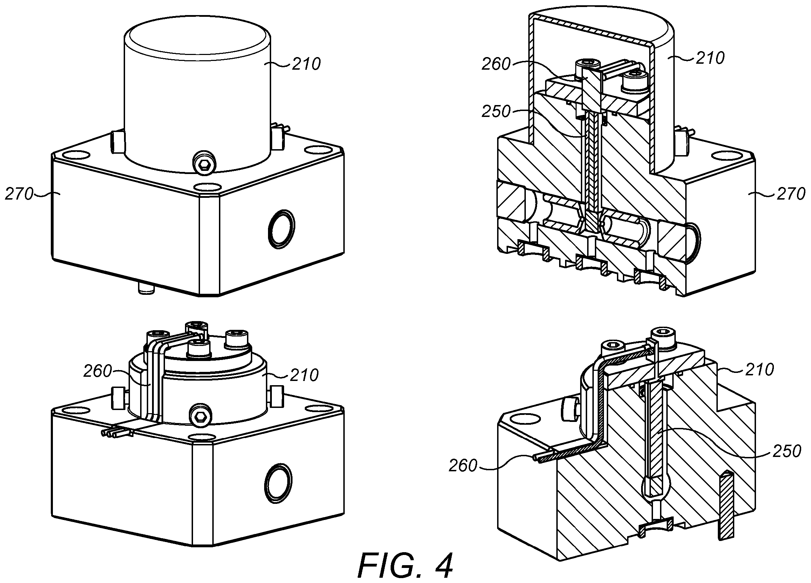

Figure 4 depicts the internal and external features of the new type of servovalve 200 and shows how the wiring may be positioned relative to the servovalve body 290.

Figure 5a depicts the new type of flapper 250 connected to the bracket 220 and figure 5b depicts how the different layers 251, 252, 253 of the flapper 250 react to a voltage being applied thereto. In this figure, the layers 251 and 253 are the active layers, one of which is receiving a negative voltage and one of which is receiving a positive voltage. The passive layer 252 is sandwiched between these two active layers 251, 253. The passive layer 252 does not receive any voltage and does not contract or expand.

Figure 6 depicts a cross-section of the new type of servovalve 200 showing air gaps 700 between the end of the flapper 250 and the nozzles 180a, 180b. Upon application of a positive voltage to a first active layer 251 and a simultaneous negative voltage to the second active layer 253, the bimorph piezoelectric flapper 250 bends left/right and in the direction away from and to the nozzles 180a, 180b.

A method of making this new type of servovalve 200 comprises providing first 180a and second 180b nozzles and the new type of flapper 250 within the servovalve body 270. As discussed above, the flapper 250 is a bimorph piezoelectric flapper 250 and comprises a first layer 251 of piezoelectric material and a second layer 252 of piezoelectric material. The method of making the servovalve further comprises providing means 260 (i.e. a power source) for providing a positive voltage to one of the first and second layers 251, 252 and a negative voltage to the other of the first and second layers 252. As also discussed above, the flapper 250 extends longitudinally between a first end 258 and a second end 259 and so the method further comprises positioning the flapper so that said second end 259 of the flapper 250 is between the first 180a and second nozzles 180b. The first layer 251 faces the first nozzle 180a and the second layer 253 faces the second nozzle 180b.

One of the first and second layers 251, 253 is made from a material that is configured to contract in a direction away from one of the nozzles and the other of the first and second layers 251, 252 is made from a material that is configured to extend in the direction of the other of the nozzles 180b when the voltages are applied to the flapper 250.

The method of making the servovalve may also comprise making the servovalve to have any of the above discussed features, such as making/providing the flapper 250 so that is further comprises a third layer 252 positioned between the first 251 and second layers 253.

The method also comprises making/providing a flapper 250 so that the first layer 251 and the second layer 253 have different thicknesses to each other in a state when no voltages are applied. The method may also comprise making the flapper/providing the flapper so that it is made from layers of more than one piezoelectric material.

The method may also comprise forming the servovalve body 270 so that it is a single component and not made up from different components that are then assembled together.

The method may also comprise attaching the flapper 250 at its first end 258 to the bracket 220.

The method may also comprise connecting the flapper 250 at its first end 258 to wiring, the wiring being said means for providing the first and second voltages.

The method may also comprise providing the servovalve body with a supply port 171, a control port 172 and a return port 173 which are in fluid communication with the nozzles 180a, 180b.

The method may further comprise providing a cover 210 over the flapper 250) and the wiring that provides the first and second voltages.

The method may also comprise hermetically sealing the servovalve.

These new types of servovalves and methods for making the same as described herein provide significant advantages over known servovalves. For example, they simplify the structure of the torque motor, and remove the need for complicated and expensive parts. They also eliminate the need for the vulnerable O-rings seals which are found in known servovalves. They also eliminate the need for brazed connections. In addition to this, they eliminate the difficult problem of cutting the air gaps between the pole pieces and the plate. The examples described herein also allow for the servovalve to be hermetically sealed so that the valve is closed off from contamination by dirt, dust etc.

## Claims

1. A hydraulic servo valve (200) comprising:
a servovalve body (270) with first (180a) and second (180b) nozzles and a flapper (250) provided therein,
wherein said flapper (250) is a bimorph piezoelectric flapper (250) and comprises:
a first layer (251) of piezoelectric material and a second layer (252) of piezoelectric material,
and wherein said servovalve further comprises
means (260) for providing a positive voltage to one of said first and second layers (251, 252) and a negative voltage to the other of said first and second layers (252), and
wherein said flapper (250) extends longitudinally between a first end (258) and a second end (259) and wherein said second end (259) of said flapper (250) is positioned so as to be between said first (180a) and second nozzles (180b) so that said first layer (251) faces said first nozzle (180a) and said second layer (253) faces said second nozzle (180b), and
wherein said one of said first and second layers (251, 253) is made from a material that is configured to contract in a direction away from one of said nozzles and wherein the other of said first and second layers (251, 252) is made from a material that is configured to extend in the direction of the other of said nozzles (180b) when said voltages are applied to said flapper (250) and **characterized in that** said first layer (251) and said second layer (253) have different thicknesses to each other in a state when no voltages are applied.

2. The servovalve of claim 1 wherein said flapper (250) further comprises a third layer (252) positioned between said first (251) and second layers (253).

3. The servovalve of claim 1 or claim 2 wherein said flapper (250) extends along a longitudinal axis L from said first end (258) to said second end (259), and wherein said first layer (251) extends longitudinally between said first end (258) and said second end (259) and wherein said second layer (253) extends longitudinally between said first end (258) and said second end (259).

4. The servo valve of claim 1 wherein the flapper (250) is made from layers of more than one piezoelectric material.

5. The servovalve of any preceding claim wherein said servovalve body (270) is formed from a single component.

6. The servovalve of any preceding claim wherein said flapper is attached at its first end (258) to a bracket (220).

7. The servovalve of any preceding claim wherein said flapper is connected at its first end (258) to wiring, said wiring being said means for providing said first and second voltages.

8. The servovalve of any preceding claim wherein said servovalve body (270) comprises a supply port (171), a control port (172) and a return port (173) which are in fluid communication with said nozzles (180a, 180b)

9. The servovalve of any preceding claim wherein a cover (210) is provided over said flapper (250) and said means for providing said first and second voltages.

10. The servovalve of any preceding claim wherein the servovalve is hermetically sealed.

11. The servovalve of any preceding claim wherein said servovalve is sealed without the use of an O-ring.

12. A method of making a servovalve (200) comprising:
providing first (180a) and second (180b) nozzles and a flapper (250) within a servovalve body (270), wherein said flapper (250) is a bimorph piezoelectric flapper (250) and comprises:
a first layer (251) of piezoelectric material and
a second layer (252) of piezoelectric material,
said method further comprising:
providing means (260) for providing a positive voltage to one of said first and second layers (251, 252) and a negative voltage to the other of said first and second layers (252), and
wherein said flapper (250) extends longitudinally between a first end (258) and a second end (259) and the method further comprising positioning said flapper so that said second end (259) of said flapper (250) is between said first (180a) and second nozzles (180b) and said first layer (251) faces said first nozzle (180a) and said second layer (253) faces said second nozzle (180b), and
wherein said one of said first and second layers (251, 253) is made from a material that is configured to contract in a direction away from one of said nozzles and wherein the other of said first and second layers (251, 252) is made from a material that is configured to extend in the direction of the other of said nozzles (180b) when said voltages are applied to said flapper (250), and **characterized by** providing said flapper (250) so that the first layer (251) and the second layer (253) have different thicknesses to each other in a state when no voltages are applied.

## Patentansprüche

1. Hydraulisches Servoventil (200), umfassend:
einen Servoventilkörper (270) mit ersten (180a) und zweiten (180b) Düsen und einer darin bereitgestellten Klappe (250),
wobei die Klappe (250) eine bimorphe piezoelektrische Klappe (250) ist und Folgendes umfasst:
eine erste Schicht (251) aus piezoelektrischem Material und
eine zweite Schicht (252) aus piezoelektrischem Material,
und wobei das Servoventil ferner Folgendes umfasst:
Mittel (260) zum Bereitstellen einer positiven Spannung an eine von der ersten und der zweiten Schicht (251, 252) und einer negativen Spannung an die andere von der ersten und der zweiten Schicht (252), und
wobei sich die Klappe (250) längs zwischen einem ersten Ende (258) und einem zweiten Ende (259) erstreckt und wobei das zweite Ende (259) der Klappe (250) so positioniert ist, dass es sich zwischen der ersten (180a) und der zweiten Düse (180b) befindet, sodass die erste Schicht (251) der ersten Düse (180a) zugewandt ist und die zweite Schicht (253) der zweiten Düse (180b) zugewandt ist, und
wobei die eine von der ersten und der zweiten Schicht (251, 253) aus einem Material hergestellt ist, das dazu konfiguriert ist, sich in einer Richtung weg von einer der Düsen zusammenzuziehen, und wobei die andere von der ersten und der zweiten Schicht (251, 252) aus einem Material hergestellt ist, das dazu konfiguriert ist, sich in die Richtung der anderen der Düsen (180b) auszudehnen, wenn die Spannungen an die Klappe (250) angelegt sind, und **dadurch gekennzeichnet, dass** die erste Schicht (251) und die zweite Schicht (253) in einem Zustand, in dem keine Spannungen angelegt sind, unterschiedliche Dicken zueinander aufweisen.

2. Servoventil nach Anspruch 1, wobei die Klappe (250) ferner eine dritte Schicht (252) umfasst, die zwischen der ersten (251) und der zweiten Schicht (253) positioniert ist.

3. Servoventil nach Anspruch 1 oder Anspruch 2, wobei sich die Klappe (250) entlang einer Längsachse L von dem ersten Ende (258) zu dem zweiten Ende (259) erstreckt und wobei sich die erste Schicht (251) längs zwischen dem ersten Ende (258) und dem zweiten Ende (259) erstreckt und wobei sich die zweite Schicht (253) längs zwischen dem ersten Ende (258) und dem zweiten Ende (259) erstreckt.

4. Servoventil nach Anspruch 1, wobei die Klappe (250) aus Schichten aus mehr als einem piezoelektrischen Material hergestellt ist.

5. Servoventil nach einem der vorhergehenden Ansprüche, wobei der Servoventilkörper (270) aus einer einzigen Komponente gebildet ist.

6. Servoventil nach einem der vorhergehenden Ansprüche, wobei die Klappe an ihrem ersten Ende (258) an einer Halterung (220) angebracht ist.

7. Servoventil nach einem der vorhergehenden Ansprüche, wobei die Klappe an ihrem ersten Ende (258) mit einer Verkabelung verbunden ist, wobei die Verkabelung das Mittel zum Bereitstellen der ersten und der zweiten Spannung ist.

8. Servoventil nach einem der vorhergehenden Ansprüche, wobei der Servoventilkörper (270) einen Zufuhranschluss (171), einen Steueranschluss (172) und einen Rücklaufanschluss (173) umfasst, die in Fluidverbindung mit den Düsen (180a, 180b) stehen.

9. Servoventil nach einem der vorhergehenden Ansprüche, wobei über der Klappe (250) und den Mitteln zum Bereitstellen der ersten und der zweiten Spannung eine Abdeckung (210) bereitgestellt ist.

10. Servoventil nach einem der vorhergehenden Ansprüche, wobei das Servoventil hermetisch abgedichtet ist.

11. Servoventil nach einem der vorhergehenden Ansprüche, wobei das Servoventil ohne die Verwendung eines O-Rings abgedichtet ist.

12. Verfahren zum Herstellen eines Servoventils (200), umfassend:
Bereitstellen von ersten (180a) und zweiten (180b) Düsen und einer Klappe (250) innerhalb eines Servoventilkörpers (270), wobei die Klappe (250) eine bimorphe piezoelektrische Klappe (250) ist und Folgendes umfasst:
eine erste Schicht (251) aus piezoelektrischem Material und
eine zweite Schicht (252) aus piezoelektrischem Material,
wobei das Verfahren ferner Folgendes umfasst:
Bereitstellen von Mitteln (260) zum Bereitstellen einer positiven Spannung an eine von der ersten und der zweiten Schicht (251, 252) und einer negativen Spannung an die andere von der ersten und der zweiten Schicht (252), und
wobei sich die Klappe (250) längs zwischen einem ersten Ende (258) und einem zweiten Ende (259) erstreckt und wobei das Verfahren ferner Positionieren der Klappe umfasst, sodass das zweite Ende (259) der Klappe (250) sich zwischen der ersten (180a) und der zweiten Düse (180b) befindet und die erste Schicht (251) der ersten Düse (180a) zugewandt ist und die zweite Schicht (253) der zweiten Düse (180b) zugewandt ist, und
wobei die eine von der ersten und der zweiten Schicht (251, 253) aus einem Material hergestellt ist, das dazu konfiguriert ist, sich in einer Richtung weg von einer der Düsen zusammenzuziehen, und wobei die andere von der ersten und der zweiten Schicht (251, 252) aus einem Material hergestellt ist, das dazu konfiguriert ist, sich in die Richtung der anderen der Düsen (180b) auszudehnen, wenn die Spannungen an die Klappe (250) angelegt sind, und **gekennzeichnet durch** Bereitstellen der Klappe (250), sodass die erste Schicht (251) und die zweite Schicht (253) in einem Zustand, in dem keine Spannungen angelegt sind, unterschiedliche Dicken zueinander aufweisen.

## Revendications

1. Servovanne hydraulique (200) comprenant :
un corps de servovanne (270) avec une première (180a) et une seconde (180b) buses et un clapet (250) fourni dans celui-ci,
dans laquelle ledit clapet (250) est un clapet piézoélectrique bimorphe (250) et comprend :
une première couche (251) de matériau piézoélectrique et
une deuxième couche (252) de matériau piézoélectrique,
et dans laquelle ladite servovanne comprend également des moyens (260) destinés à fournir une tension positive à l'une desdites première et deuxième couches (251, 252) et une tension négative à l'autre desdites première et deuxième couches (252), et
dans laquelle ledit clapet (250) s'étend longitudinalement entre une première extrémité (258) et une seconde extrémité (259) et dans laquelle ladite seconde extrémité (259) dudit clapet (250) est positionnée de manière à être entre lesdites première (180a) et seconde buses (180b) de telle sorte que ladite première couche (251) fait face à ladite première buse (180a) et que ladite deuxième couche (253) fait face à ladite seconde buse (180b), et
dans laquelle ladite une desdites première et deuxième couches (251, 253) est constituée d'un matériau qui est configuré pour se contracter dans une direction s'éloignant de l'une desdites buses et dans laquelle l'autre desdites première et deuxième couches (251, 252) est constituée d'un matériau qui est configuré pour s'étendre dans la direction de l'autre desdites buses (180b) lorsque lesdites tensions sont appliquées audit clapet (250) et **caractérisé en ce que** ladite première couche (251) et ladite deuxième couche (253) ont différentes épaisseurs les unes par rapport aux autres dans un état où aucune tension n'est appliquée.

2. Servovanne selon la revendication 1, dans laquelle ledit clapet (250) comprend également une troisième couche (252) positionnée entre lesdites première (251) et deuxième couches (253) .

3. Servovanne selon la revendication 1 ou la revendication 2, dans laquelle ledit clapet (250) s'étend le long d'un axe longitudinal L depuis ladite première extrémité (258) jusqu'à ladite seconde extrémité (259), et dans laquelle ladite première couche (251) s'étend longitudinalement entre ladite première extrémité (258) et ladite seconde extrémité (259) et dans laquelle ladite deuxième couche (253) s'étend longitudinalement entre ladite première extrémité (258) et ladite seconde extrémité (259).

4. Servovanne selon la revendication 1, dans laquelle le clapet (250) est constitué de couches d'un ou plusieurs matériaux piézoélectriques.

5. Servovanne selon une quelconque revendication précédente, dans laquelle ledit corps de servovanne (270) est formé à partir d'un seul composant.

6. Servovanne selon une quelconque revendication précédente, dans laquelle ledit clapet est fixé à sa première extrémité (258) à un support (220).

7. Servovanne selon une quelconque revendication précédente, dans laquelle ledit clapet est connecté à sa première extrémité (258) à un câblage, ledit câblage étant ledit moyen pour fournir lesdites première et seconde tensions.

8. Servovanne selon une quelconque revendication précédente, dans laquelle ledit corps de servovanne (270) comprend un port d'alimentation (171), un port de commande (172) et un port de retour (173) qui sont en communication fluidique avec lesdites buses (180a, 180b).

9. Servovanne selon une quelconque revendication précédente, dans laquelle un couvercle (210) est prévu sur ledit clapet (250) et lesdits moyens pour fournir lesdites première et seconde tensions.

10. Servovanne selon une quelconque revendication précédente, dans laquelle la servovanne est hermétiquement scellée.

11. Servovanne selon une quelconque revendication précédente, dans laquelle ladite servovanne est scellée sans utilisation d'un joint torique.

12. Procédé de fabrication d'une servovanne (200) comprenant :
la fourniture des première (180a) et seconde (180b) buses et un clapet (250) à l'intérieur d'un corps de servovanne (270), dans laquelle ledit clapet (250) est un clapet piézoélectrique bimorphe (250) et comprend :
une première couche (251) de matériau piézoélectrique et
une deuxième couche (252) de matériau piézoélectrique,
le procédé comprenant également :
la fourniture de moyens (260) destinés à fournir une tension positive à l'une desdites première et deuxième couches (251, 252) et une tension négative à l'autre desdites première et deuxième couches (252), et
dans laquelle ledit clapet (250) s'étend longitudinalement entre une première extrémité (258) et une seconde extrémité (259) et le procédé comprenant également le positionnement dudit clapet de telle sorte que ladite seconde extrémité (259) dudit clapet (250) se trouve entre lesdites première (180a) et seconde des buses (180b) et que ladite première couche (251) fait face à ladite première buse (180a) et que ladite deuxième couche (253) fait face à ladite seconde buse (180b), et
dans laquelle ladite une desdites première et deuxième couches (251, 253) est constituée d'un matériau qui est configuré pour se contracter dans une direction s'éloignant de l'une desdites buses et dans laquelle l'autre desdites première et deuxième couches (251, 252) est réalisée à partir d'un matériau qui est configuré pour s'étendre dans la direction de l'autre desdites buses (180b) lorsque lesdites tensions sont appliquées audit clapet (250) et **caractérisé par** la fourniture dudit clapet (250) de telle sorte que la première couche (251) et la deuxième couche (253) ont différentes épaisseurs les unes par rapport aux autres dans un état où aucune tension n'est appliquée.
